# EUROPEAN PATENT APPLICATION

(11) **EP 4 657 828 A1**
(43) Date of publication of application: **03.12.2025**
(21) Application number: 25169826.2
(22) Date of filing: 10.04.2025
(51) Int. Cl.: H04L 65/1069, H04L 67/12, H04W 4/48

(54) **A METHOD FACILITATING COMMUNICATION ON A VEHICLE INTERNAL MESH COMMUNICATION NETWORK**

(30) Priority: 31.05.2024 US 202418679559
(71) Applicant: Volvo Car Corporation, 405 31 Göteborg (SE)
(72) Inventor: OVERESCH, Johannes, 405 31 Göteborg (SE); BOURGOIN, Denis, 405 31 Göteborg (SE); CARLSSON, Jonas, 405 31 Göteborg (SE)
(74) Representative: Nederlandsch Octrooibureau

(57) **Abstract**

A computer-implemented method (348) for controlling the operation of an internal mesh communication network for a vehicle (10) includes receiving data (238) indicative of a plurality of passengers seated within the vehicle (10). The computer-implemented method (348) further includes assigning to each passenger of the plurality of passengers a passenger identification (ID) based on the received data (238). The computer-implemented method (348) further includes receiving a communication request from a first passenger of the plurality of passengers. The communication request indicates at least one passenger **ID** of at least one other passenger of the plurality of passengers. The computer-implemented method (348) also includes establishing a two-way communication link between the first passenger and the at least one other passenger in response to the at least one other passenger providing affirmative communication consent.

## Description

### TECHNICAL FIELD

The present disclosure relates generally to the automotive field. More particularly, the present disclosure relates to facilitating communication between vehicle passengers on an internal mesh communication network for a vehicle.

### BACKGROUND

Travel via a vehicle such as a car, train, bus, plane, boat, etc. has long been associated with conversation between passengers of the vehicle. However, having a conversation within a vehicle can present special challenges that are not generally applicable to communication at a fixed location. Road noise can often drown out voices and sounds, leading to requests to repeat statements. Most vehicles contain at least two seats that are not positioned to face each other, forcing one of the passengers to turn around or look over his/her shoulder to hear. The operator, driver, captain, etc. traditionally and currently must give operating the vehicle a high degree of attention, presenting an even further challenge to communicating during vehicle travel. Furthermore, conversing passengers must often speak quietly to avoid disturbing or waking other passengers. Thus, even acquiring another passenger's attention to start a conversation can be challenging. Entertainment and media played in the vehicle can present further distractions and background noise enhancing communication difficulties.

As such, a need exists in the art for a system and associated methods, control systems for vehicles that overcome the above limitations.

This background is provided as an illustrative contextual environment only. It will be readily apparent to those of ordinary skill in the art that the systems and methods of the present disclosure may be implemented in other contextual environments as well.

### SUMMARY

Therefore, it is an object of the present disclosure to provide internal mesh communication networks for vehicles and associated methods of operation and control systems that overcome the limitations of the known art. The present disclosure provides an internal mesh communication network and associated system for controlling the operation of the internal mesh communication network and computer-implemented method.

Embodiments of the disclosed systems and methods facilitate communication between passengers of the vehicle desiring to converse. A passenger identification module and associated method elements can identify occupants of the vehicle, the number of occupants, and/or assign passenger identifications (passenger IDs) based on data indicating the passengers, such as vehicle sensor data and/or data retrieved from personal devices of the passengers. Such determinations may be made utilizing appropriate artificial intelligence algorithms and/or by comparing qualities or features of the passengers indicated by the data to passenger profiles. The passenger identification module and associated method elements may utilize the passenger data and above determinations to generate a visual indicator of a current vehicle passenger map, and this visual indicator functions as a graphical user interface in various embodiments.

A communication module and associated method elements can receive a communication request from an initiating passenger indicating one or more target passengers or the passenger IDs thereof and establish a two-way communication link between the passengers, if the target passenger(s) consents to the communication. For instance, the communication request may include interface input via vehicle hardware (touchscreens, buttons, dials, or the like), interface input via mobile device hardware, and/or a spoken statement. In response to the communication request, the communication module and associated method elements may hail the target passenger(s) utilizing vehicle or mobile device hardware. For instance, a tone may be played and/or may be progressively increased in volume until the target passenger responds, e.g., consents, to the two-way communication. Media, songs, videos, and the like may be paused, put in the background, or reduced in volume while hailing the target passenger(s) and/or during the two-way communication. The two-way communication may generally be provided through one or more microphones, speakers, cameras, and/or displays integrated with the vehicle and/or provided via mobile devices of the passengers.

To achieve the foregoing and other objects and advantages, in one aspect, the present subject matter is directed to a non-transitory computer-readable medium comprising instructions stored in at least one memory that, when executed by one or more processors, cause the one or more processors to carry out steps. The steps include receiving data indicative of a plurality of passengers seated within a vehicle. The steps further include assigning to each passenger of the plurality of passengers a passenger identification (ID) based on the received data. The steps further include receiving a communication request from a first passenger of the plurality of passengers. The communication request indicates at least one passenger ID of at least one other passenger of the plurality of passengers. The steps also include establishing a two-way communication link between the first passenger and the at least one other passenger in response to the at least one other passenger providing affirmative communication consent.

In at least one embodiment, the steps may further include determining a number of passengers seated within the vehicle and the position of each of the passengers relative to a predefined passenger seating availability based on the received data. In an additional or alternative embodiment, the steps may further include generating a visual indicator of a current vehicle passenger mapping via at least one display integrated with the vehicle based on the determined position of each of the passengers relative to the predefined passenger seating availability and the passenger ID assigned to each passenger. Additionally or alternatively, receiving the communication request from the first passenger of the plurality of passengers may include a vehicle interface input associated with the at least one display integrated with the vehicle and indicating the at least one passenger ID of the at least one other passenger of the plurality of passengers relative to the current vehicle passenger mapping. In additional or alternative embodiments, receiving the communication request from the first passenger of the plurality of passengers may include a natural language statement indicative of the at least one passenger ID of the at least one other passenger of the plurality of passengers. In some such embodiments or different embodiments, the passenger ID may be assigned to each passenger of the plurality of passengers utilizing an artificial intelligence algorithm.

Additionally or alternatively, the received data may be further indicative of at least one passenger quality of at least one passenger of the plurality of passengers. In such embodiments, assigning to each passenger of the plurality of passengers the passenger ID may include comparing the received data indicative of the at least one passenger quality of the at least one passenger with a plurality of passenger profiles and identifying at least one passenger profile associated with the data indicative of the at least one passenger quality of the at least one passenger. Additionally or alternatively, assigning to each passenger of the plurality of passengers a passenger ID may include assigning the at least one passenger profile to the at least one passenger of the plurality of passengers based on the identified association between the at least one passenger and the at least one passenger profile.

In some additional or alternative embodiments, establishing a two-way communication link between the first passenger and the at least one other passenger may include establishing a two-way communication link between at least a first microphone and a first speaker associated with a first seat of the vehicle, where the first passenger is seated, and at least a second microphone and a second speaker associated with a second seat of the vehicle, where a second passenger is seated. Such second passenger may be included in the at least one other passenger. Additionally or alternatively, the two-way communication link between the first passenger and the at least one other passenger may include a video two-way communication link.

In further embodiments or different embodiments, the steps may further include hailing the at least one other passenger for communication consent, in response to the communication request. Additionally or alternatively, hailing the at least one other passenger for communication consent may include requesting communication consent via at least one mobile device associated with the at least one other passenger. In some such embodiments, the request for communication consent may pause any media playing on the at least one mobile device and provide the request for communication consent to the at least one other passenger via the at least one mobile device.

In further or alternative embodiments, the received data may be further indicative of at least one mobile device associated with at least one passenger of the plurality of passengers seated within the vehicle. In additional or alternative embodiments, establishing a two-way communication link between the first passenger and the at least one other passenger may include establishing the two-way communication link between the first passenger and at least one mobile device associated with the at least one other passenger.

In an additional or alternative aspect, the present subject matter is directed to a system for controlling the operation of an internal mesh communication network for a vehicle. The system includes a passenger identification module comprising instructions stored in at least one memory and executable by one or more processors to cause the passenger identification module to assign to each passenger of a plurality of passengers a passenger identification (ID) based on data indicative of the plurality of passengers seated within the vehicle. The system further includes a communication module comprising instructions stored in at least one memory and executable by one or more processors to cause the communication module to receive a communication request from a first passenger of the plurality of passengers. The communication request indicates at least one passenger ID of at least one other passenger of the plurality of passengers. The instructions of the communication module, when executed by the processor(s), further cause the communication module to establish a two-way communication link between the first passenger and the at least one other passenger in response to the at least one other passenger providing affirmative communication consent.

In at least one embodiment, the instructions of the passenger identification module, when executed by the processor(s), may further cause the passenger identification module to determine a number of passengers seated within the vehicle and the position of each of the passengers relative to a predefined passenger seating availability based on the data indicative of the plurality of passengers seated within the vehicle. Additionally or alternatively, the instructions of the passenger identification module, when executed by the processor(s), may further cause the passenger identification module to generate a visual indicator of a current vehicle passenger mapping via at least one display integrated with the vehicle based on the determined position of each of the passengers relative to the predefined passenger seating availability and the passenger ID assigned to each passenger. In additional or alternative embodiments, receiving the communication request from the first passenger of the plurality of passengers may include a vehicle interface input associated with the at least one display integrated with the vehicle and indicating the at least one passenger ID of the at least one other passenger of the plurality of passengers relative to the current vehicle passenger mapping.

In an additional or alternative embodiments, establishing the two-way communication link between the first passenger and the at least one other passenger may include establishing the two-way communication link between at least a first microphone and a first speaker associated with a first seat of the vehicle where the first passenger is seated and at least a second microphone and a second speaker associated with a second seat of the vehicle where a second passenger is seated. The second passenger may be included in the at least one other passenger. Additionally or alternatively, the instructions of the communication module, when executed by the processor(s), may further cause the communication module to hail the at least one other passenger for communication consent, in response to the communication request.

In some further or different embodiments, the data indicative of the plurality of passengers seated within the vehicle may be further indicative of at least one mobile device associated with at least one passenger of the plurality of passengers seated within the vehicle. Additionally or alternatively, establishing the two-way communication link between the first passenger and the at least one other passenger may include establishing the two-way communication link between the first passenger and at least one mobile device associated with the at least one other passenger. Additionally or alternatively, hailing the at least one other passenger for communication consent may include requesting communication consent via at least one mobile device associated with the at least one other passenger. In some such embodiments, the request for communication consent may pause any media playing on the at least one mobile device and provide the request for communication consent to the at least one other passenger via the at least one mobile device.

Embodiments of the invention can include one or more or any combination of the above features and configurations.

Additional features, aspects, and advantages of the invention will be set forth in the detailed description of illustrative embodiments that follows, and in part will be readily apparent to those skilled in the art from that description or recognized by practicing the invention as described herein. It is to be understood that both the foregoing general description and the following detailed description present various embodiments of the invention and are intended to provide an overview or framework for understanding the nature and character of the invention as it is claimed. The accompanying drawings are included to provide a further understanding of the invention and are incorporated in and constitute a part of this specification.

### BRIEF DESCRIPTION OF THE DRAWINGS

A full and enabling disclosure of the present invention, including the best mode thereof, directed to one of ordinary skill in the art, is set forth in the specification, which makes reference to the companying drawings, in which:
FIG. 1 illustrates a schematic diagram of an exemplary embodiment of an internal mesh communication network for a vehicle and associated control system, in accordance with aspects of the present subject matter;
FIG. 2 illustrates a schematic logic diagram of an exemplary embodiment of a system for controlling the operation of an internal mesh communication network for a vehicle, in accordance with aspects of the present subject matter;
FIG. 3 illustrates an exemplary embodiment of a method for controlling operation of an internal mesh communication network for a vehicle in accordance with aspects of the present subject matter;
FIG. 4 illustrates an exemplary embodiment of a visual indicator of a current vehicle passenger mapping in accordance with aspects of the present subject matter;
FIG. 5 illustrates a schematic diagram of an exemplary embodiment of a network of a cloud-based system for implementing various cloud-based services, in accordance with aspects of the present subject matter;
FIG. 6 illustrates a schematic diagram of an exemplary embodiment of a server which may be used in the cloud-based system of FIG. 5 or stand-alone, in accordance with aspects of the present subject matter; and
FIG. 7 illustrates a schematic diagram of an exemplary embodiment of a user device which may be used in the cloud-based system of FIG. 5 or stand-alone, in accordance with aspects of the present subject matter.

It will be readily apparent to those of ordinary skill in the art that aspects of illustrated embodiments may be used in any desired combinations, without limitation. Repeat use of reference characters in the present specification and drawings is intended to represent the same or analogous features or elements of the present invention.

### DETAILED DESCRIPTION

The present invention will now be described more fully hereinafter with reference to the accompanying drawings in which exemplary embodiments of the invention are shown. However, the invention may be embodied in many different forms and should not be construed as limited to the representative embodiments set forth herein. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. It is envisioned that other embodiments may perform similar functions and/or achieve similar results. Any and all such equivalent embodiments and examples are within the scope of the present invention and are intended to be covered by the appended claims.

The exemplary embodiments are provided so that this disclosure will be both thorough and complete and will fully convey the scope of the invention and enable one of ordinary skill in the art to make, use, and practice the invention. The word "exemplary" is used herein to mean "serving as an example, instance, or illustration." Any implementation described herein as "exemplary" is not necessarily to be construed as preferred or advantageous over other implementations.

The terms "coupled," "fixed," "attached to," "communicatively coupled to," "operatively coupled to," and the like refer to both direct coupling, fixing, attaching, communicatively coupling, and operatively coupling as well as indirect coupling, fixing, attaching, communicatively coupling, and operatively coupling through one or more intermediate components or features, unless otherwise specified herein. "Communicatively coupled to" and "operatively coupled to" can refer to physically and/or electrically related components.

As used herein, the terms "first", "second", and "third" may be used interchangeably to distinguish one component from another and are not intended to signify location or importance of the individual components. The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Again, embodiments of the disclosed systems and methods facilitate communication between passengers of the vehicle desiring to converse. A passenger identification module and associated method elements can identify occupants of the vehicle, the number of occupants, and/or assign passenger identifications (passenger IDs) based on data indicating the passengers, such as vehicle sensor data and/or data retrieved from personal devices of the passengers. Such determinations may be made utilizing appropriate artificial intelligence algorithms and/or by comparing qualities or features of the passengers indicated by the data to passenger profiles. The passenger identification module and associated method elements may utilize the passenger data and above determinations to generate a visual indicator of a current vehicle passenger map, and this visual indicator functions as a graphical user interface in various embodiments.

A communication module and associated method elements can receive a communication request from an initiating passenger indicating one or more target passengers or the passenger IDs thereof and establish a two-way communication link between the passengers, if the target passenger consents to the communication. For instance, the communication request may include interface input via vehicle hardware (touchscreens, buttons, dials, or the like), interface input via mobile device hardware, and/or a spoken statement. In response to the communication request, the communication module and associated method elements may hail the target passenger(s) utilizing vehicle or mobile device hardware. For instance, a tone may be played and/or may be progressively increased in volume until the target passenger(s) responds, e.g., consents, to the two-way communication. Media, songs, videos, and the like may be paused, put in the background, or reduced in volume while hailing the target passenger(s) and/or during the two-way communication. The two-way communication may generally be provided through one or more microphones, speakers, cameras, and/or displays integrated with the vehicle and/or provided via mobile devices of the passengers.

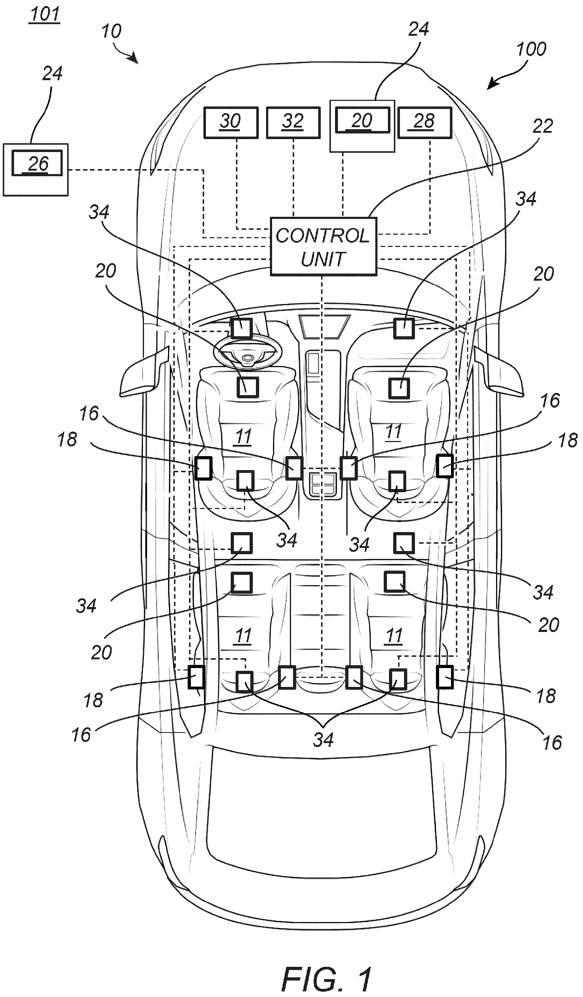

Referring now generally to FIG. 1, a schematic diagram of an exemplary embodiment of a system for controlling an operation of an internal mesh communication network for a vehicle is illustrated in accordance with aspects of the present subject matter. As shown, a vehicle 10 may generally include a system for controlling and/or managing the operation of an internal mesh communication network (system 100) and/or one or more microphones 16 and speakers 18, as described herein. For example, the system 100 may include a microphone 16 and a speaker 18 for each seat assembly 11 provided in the vehicle 10.

While each seat assembly 11 of FIG. 1 is illustrated with a dedicated microphone 16, some vehicles 10 and/or systems 100 may not include a microphone for each seat assembly 11. For example, only a portion of the seat assemblies 11 may be provided with a dedicated microphone 16, such as some but not all of the rear seat assemblies 11. In some embodiments, adjacent seat assemblies 11 may share a microphone 16 and/or a speaker 18 configured for use with embodiments of the system 100 described herein. Furthermore, at least some of the passengers seated within the vehicle 10, such as the passenger of each seat assembly 11 may have a mobile device 20 (e.g., a cellular phone, tablet, laptop, MP4/MP3 audio device, or the like). Embodiments of the system 100 disclosed herein may utilize the mobile device(s) 20 of the passengers to determine passengers' identification and/or to establish two-way communication links between passengers of the vehicle 10. It should be appreciated that the microphones and/or speakers provided in association with the vehicle 10 and/or mobile devices 20 may include a headset, ear buds, or the like utilized in associated with such equipment, e.g., a wireless headset communicatively coupled with the control unit 22 or a mobile device 20.

In some embodiments, the vehicle 10 may be an electric vehicle having electrical components (e.g., batteries) for propelling the vehicle 10. Alternatively, the vehicle 10 may be configured with a rear-mounted or front-mounted internal combustion engine. In other embodiments, the vehicle 10 may be configured as a hybrid vehicle, which is driven by both a petroleum product (e.g., gas, diesel, jet fuel, and the like) and electrical power. It will be appreciated that the exemplary vehicle(s) 10 depicted and described herein are by way of example only, and, in other exemplary embodiments, the vehicle 10 may have any other suitable configuration, including, for example, any other suitable number of rows of seats, rows of doors, etc. and associated microphones 16, speakers 18, and/or mobile device 20 provided for some and up to all of the seat assemblies 11. Additionally or alternatively, in other exemplary embodiments, any other suitable power sources may be provided. For example, the vehicle 10 may include a liquid or gaseous hydrogen powered engine, a gas turbine engine, an inboard motor, an outboard motor, etc.

While embodiments of the vehicle 10 herein may be illustrated or described as an automotive vehicle, it should be appreciated that the present disclosure is equally applicable to any other form of transportation (e.g., trains, rotary-wing aircraft, fixed-wing aircraft, boats, busses, passenger rail cars, public transportation, amusement rides/carts, and the like) where an internal mesh communication network is desired or required to facilitate communication links between at least two passengers of the vehicle, such as passengers separated by intervening passengers, seats 11, rows of seats 11, other obstacles, and/or the like. Thus, regardless of the type of power train, design, or model of the vehicle 10, the vehicle 10 may include or be utilized with embodiments of the system 100, as described herein.

As shown, the vehicle 10 and/or system 100 may further include a control unit 22 (e.g., an electronic control unit, multiple associated control units, and/or a combination of one or more processing devices and at least one memory or memory device as described herein) communicatively coupled to the microphone(s) 16, speaker(s) 18, and/or mobile device(s) 20 of one or more of the seat assemblies 11, such as all of the seat assemblies 11, and configured to direct operation of one or more of such components in accordance with aspects of the present subject matter. While a single control unit 22 is illustrated in FIG. 1 for simplicity, it should be appreciated that the control unit 22 may include multiple associated control units that together are configured to provide operational control of the system 100, the microphone(s) 16, and/or the speaker(s) 18. The control unit 22 may additionally or alternatively facilitate communication between the system 100, the microphone(s) 16, and/or the speaker(s) 18 and the mobile device(s) 20 associated with one or more of the seat assemblies 11.

Generally, the control unit 22 may be configured to receive data indicative of the passengers of the vehicle, to assign passenger identifications (passenger IDs) based on such data, and to establish a two-way communication link between a first passenger and at least one other passenger (e.g., one or more target passengers). For example, in response to a communication request from the first passenger indicating the target passenger(s) (e.g., the passenger ID(s) thereof) and affirmative communication consent from the target passenger(s), the control unit 22 may control the microphone(s) 16 and/or the speaker(s) 18 associated with the seat assembly 11 of the first passenger and/or the seat assembly 11 of the target passenger(s) to provide the two-way communication link between the first passenger and the target passenger(s). Furthermore or alternatively, the control unit 22 may be configured to facilitate such two-way communication utilizing the mobile device(s) 20 (e.g., a microphone, a speaker, a screen, and/or a camera thereof) of the first passenger and/or the target passenger(s).

Thus and as shown in FIG 1., the control unit 22 may provide operational control of the microphone(s) 16, the speaker(s) 18, and/or the mobile device(s) 20 associated with one or more of the seat assemblies 11 of the system 100 and/or may be communicatively coupled with various additional or alternative components of the vehicle 10 or components associated with the vehicle 10, as described in more detail below. While some communication links in FIG. 1 may be illustrated as joint communication links, it should be appreciated that one or more components communicatively coupled to the control unit 22, such as all of the components, may have component dedicated communication links (e.g., wireless or wired communication links with the control unit 22).

In some embodiments and as shown, the control unit 22 may include or be communicatively coupled with one or more external devices 24 (such as any of the mobile devices 20 described herein). The external device(s) 24 may communicate inputs to the control unit(s) 22 utilized to control operation of the system 100, the microphone(s) 16, the speaker(s) 18, and/or the mobile device(s) 20 associated with one or more of the seat assemblies 11. As also shown in FIG. 1, the external device(s) 24 communicatively coupled to the control unit(s) 22 may include one or more remote servers, processing units, memory devices, computing devices, or the like (e.g., one or remote computing devices 26).

By applying an appropriate algorithm in the control unit 22, the system 100 can be integrated with the rest of the vehicle systems, with input from/output to a vehicle transmission 28, a vehicle power supply 30, an infotainment unit or system (infotainment unit 32), one or more passenger sensors 34 (e.g., internal passenger sensors as illustrated and/or external passenger sensors), and/or one or more external devices 24, such as the remote computing device(s) 26 and/or mobile device(s) 20, that includes a mobile application and/or a cloud application configured to provide external information to the control unit 22, such as passenger profile information and/or instructions associated with a passenger identification module/method, as described in more detail herein.

In some embodiments, besides controlling the operation of the system 100, the microphone(s) 16, the speaker(s) 18, and/or the mobile device(s) 20 associated with one or more of the seat assemblies 11, the control unit 22 may also provide useful information to the driver, either directly to the infotainment unit 32, such as a display thereof, or the external device(s) 24, such as a user interface thereof. The user interface of the external device(s) 24 and/or the infotainment unit 32 may include one or more buttons, switches, touch screen capability, or the like allowing a user, passenger, operator, etc. to communicate inputs to the control unit 22 utilized to control operation of the system 100, the microphone(s) 16, the speaker(s) 18, and/or the mobile device(s) 20 associated with one or more of the seat assemblies 11, at least in part.

As shown, the system 100 and/or vehicle 10 may include one or more seat sensor (e.g., passenger sensor(s) 34), such as one seat sensor associated with each seat assembly 11 of the vehicle 10. Some embodiments of the seat sensor may include a sensor, circuit, or the like suitable to communicate a signal indicative of whether the associated seat assembly 11 is occupied or empty. For example, a suitable seat sensor may be configured to communicate a signal indicating pressure or weight on the seat, which may indicate at occupied seat assembly 11. Additionally or alternatively, a suitable seat sensor may be configured to communicate a signal indicating use of an associated seat belt, which may indicate at occupied seat assembly 11.

As shown, the passenger restraint system 100 may include one or more additional or alternative passenger sensors 34, such as one or more internal passenger sensors 34 associated with each seat 11 of the vehicle 10, as shown, and/or one or more external passenger sensors (omitted for clarity) for each door or entry to the vehicle 10. The passenger sensor(s) 34 may generally be configured to communicate one or more signals indicative of, without limitation, one or more qualities of a passenger seated within an associated seat assembly 11 of the vehicle 10, one or more qualities of a potential passenger about to enter the vehicle 10, and/or one or more qualities of a passenger in the process of being seated in a seat assembly 11. For instance, the passenger seat sensor(s) 34 may communicate data indicative of, but not limited to, height; skin tone; hair color, hair length, hair style, or degree of baldness; clothing style; the passenger's voice and/or speech patterns; passenger weight or BMI estimation; passenger behavior; passenger physical challenges, disabilities, assistive technologies, injuries, etc.; and/or the identity of the passenger. The passenger sensor(s) 34 may include, without limitation, one or more audio sensors, optical sensors, RADAR sensors, LIDAR sensors, inferred sensors, other sensors suitable to transmit and/or receive suitable electromagnetic signals/waves, acoustic sensors, RFID transceivers/receivers, proximity sensors, a seat sensor (e.g., a weight sensor embedded or provided in association with the seat 11), and/or the like.

With respect to external embodiments of the passenger sensor(s) 34 (omitted from FIG. 1). Such external passenger sensor(s) may generally be configured to communicate one or more signals indicative of, without limitation, that a passenger has approached an associated door of the vehicle 10; one or more qualities of a passenger within proximity of the door (e.g., height; skin tone; hair color, hair length, hair style, or degree of baldness; clothing style; passengers voice and/or speech patterns; passenger weight or BMI estimations; passenger behavior; passenger physical challenges, disabilities, assistive technologies, injuries, etc.; and/or the identity of the passenger).

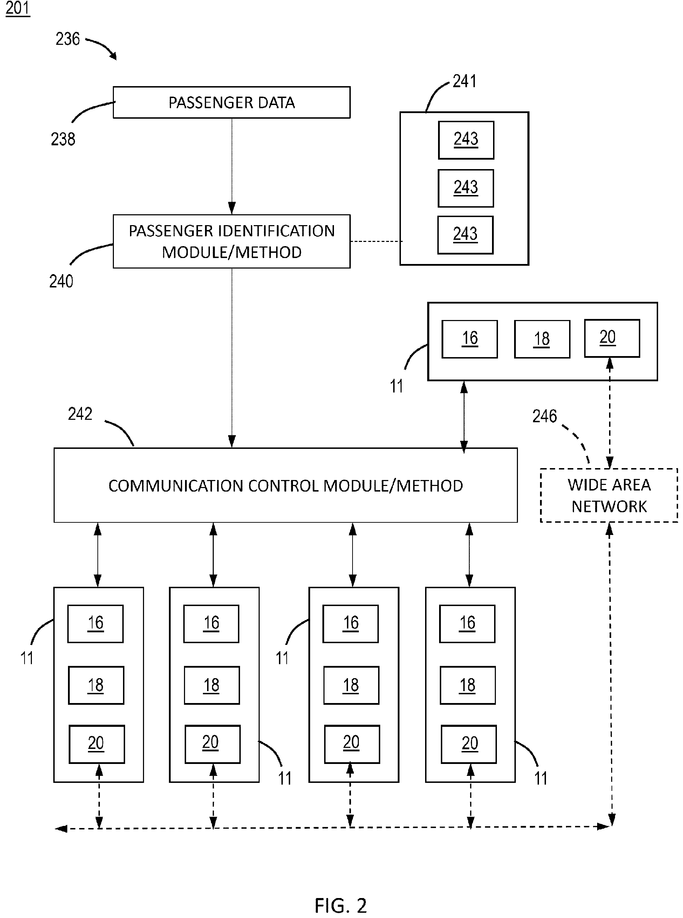

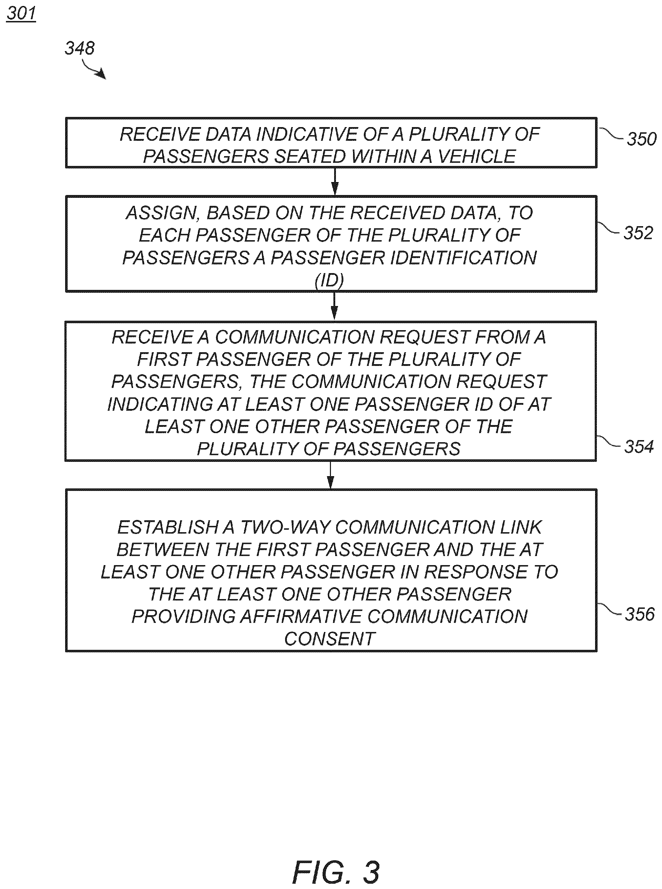

Referring now to FIGS. 2-3, FIG. 2 illustrates a schematic logic diagram of an exemplary embodiment of a system for controlling the operation of an internal mesh communication network for a vehicle, in accordance with aspects of the present subject matter, and FIG. 3 illustrates one exemplary embodiment of a method for controlling operation of an internal mesh communication network for a vehicle in accordance with aspects of the present disclosure. The logic diagram depicted in FIG. 2 (control logic 236) and/or the method or process (method 348) depicted in FIG. 3 may be utilized to control or in association with embodiments of the vehicle 10, the system 100, the microphone(s) 16, the speaker(s) 18, the mobile device(s) 20, and/or the passenger sensor(s) 34 as described with respect to FIG. 1 and/or other similar or suitably configured vehicles, systems for controlling the operation of an internal mesh communication network for a vehicle, microphones, speakers, mobile devices, and/or passenger sensors. The control logic 236 may include one or more modules including instructions stored in at least one memory and executable by one or more processors to cause the processor(s) to implement steps, method elements, or the like as described herein. For example, elements of the control logic 236 and/or method 348 may be implemented, at least in part, by the control unit 22 and stored in memory associated with the control unit 22 and/or included with or accessible by the vehicle 10.

As shown, the control logic 236 may include a passenger identification module and/or method (passenger identification module 240) configured to determine the number of passengers of the vehicle, identify the passengers, and/or determine the position of the passengers within the vehicle 10, e.g., a seat assembly 11 associated with each passenger. Such determination(s) may be based on data indicative of one or more passenger qualities (e.g., passenger data 238) of a passenger seated in, about to be seated in, and/or associated with a seat assembly 11 of the vehicle 10. For example, the passenger identification module 240 may receive data indicative of a plurality of passengers seated within a vehicle (e.g., method element 350). The method 348 may include and/or the passenger identification module 240 may be configured to determine, based on the received passenger data 238, a number of passengers seated within the vehicle 10 and/or a position of each of the passengers relative to a predefined passenger seating availability.

In some situations and/or embodiments, passenger data 238 may include an indication that the system 100 and/or control unit 22 has been communicatively coupled to one or more mobile devices 20. The coupling of the control unit 22 with the mobile device(s) 20 may indicate, at least, a minimum number of passengers of the vehicle and/or position(s) of the associated passenger(s) within the vehicle 10 (e.g., for a wired connection between the system 100/vehicle 10 and the mobile device(s) 20). In some embodiments, data indicating communication between the system 100 and/or control unit 22 and a mobile device 20 may not be sufficient, by itself, to determine the position and/or seat assembly 11 of an associated passenger. However, additional data received from one or more of the passenger sensors 34 may be sufficient to identify the position and/or seat assembly 11 of the associated passenger, or at least reduce the possibilities of the correct position or seat 11 within the vehicle. For example, RFID sensors may be utilized to determine the location of the mobile device 20. Additionally or alternatively, triangulation of one or more wireless signals transmitted by each mobile device 20 may be utilized to determine a location or approximate location of the associated mobile device(s) 20 within the vehicle 10. In some embodiments, the passenger data 238 may include data retrieved from the mobile device(s) 20 indicative of a given name(s) or nickname(s) of the associated passenger(s), past-utilized or previously indicated preferred seat assembly(ies) 11 of the passenger(s), and/or one or more qualities of the passenger(s). It should be appreciated that any deficiencies in identifying the number, identity, and/or position of the passengers of the vehicle 10 may be cured utilizing appropriate portions of other procedures described herein, such as the below description.

In some embodiments of the control logic 236, the passenger data 236 may be communicated from one or more of the passenger sensors 34 (e.g., one or more internal passenger sensors and/or external passenger sensors), as described herein, and/or the external device(s) 24 (e.g., the remote computing device(s) 26, mobile device(s) 20, and/or other suitably configured external computing device(s) that include a mobile application and/or a cloud application configured to provide external information to the control unit 22).

The method 348 may include and/or the passenger identification module 240 may be configured to assign to each passenger of the plurality of passengers a passenger identification (ID) based on the passenger data 238 of the passengers seated within the vehicle 10, see, e.g., method element 352. Additionally or alternatively, the passenger ID(s) may be assigned to the passenger(s) (e.g., at least one passenger, at least a portion of the passengers, or all of the passengers) utilizing an artificial intelligence algorithm.

In at least one embodiment, the passenger identification module 240 and/or associated method 348 may include or be associated with one or more artificial intelligence programs. For example, the number of passengers may be determined and/or the passenger IDs may be assigned to the passengers utilizing the artificial intelligence algorithm(s) and based on the passenger data 238 indicative of the passenger quality(ies) of the passenger(s) seated within the associated seat assembly(ies) 11 of the vehicle 10, one or more qualities of one or more potential passengers about to enter the vehicle 10, and/or one or more qualities of one or more passengers in the process of being seated in respective seat assemblies 11 of the vehicle 10.

The artificial intelligence algorithms(s) may include one or more algorithms, programs, modules, and the like suitable to simulate intelligence human behavior or perform tasks historically requiring human implementation. For example, the artificial intelligence algorithms may include, without limitation, one or more of machine learning algorithms, artificial neural networks, recurrent artificial neural networks, feedforward neural networks, convolutional neural networks, recurrent neural networks, deep neural networks, natural language processing algorithms, long short term memory networks, inductive logic programming algorithms, support vector machines, clustering algorithms, Bayesian networks, reinforcement learning algorithms, representation learning algorithms, similarity and metric learning algorithms, sparse dictionary learning algorithms, genetic algorithms, k-nearest neighbor (KNN) algorithms, decision tree learning algorithms, association rule learning algorithms, and the like. Some of the artificial intelligence algorithms described herein may be trained (via a supervised or unsupervised training process) based on training data provided to the artificial intelligence algorithms. Thus, the artificial intelligence algorithm(s) may generally be utilized to determine the number of passengers in the vehicle 10, the positions of the passengers of the vehicle, and a passenger ID of each passenger of the vehicle based at least in part on the passenger data 238 indicative of the passenger quality(ies).

As shown particularly in FIG. 2 and for some embodiments, the passenger identification module 238 may be communicatively coupled to a passenger profile repository 241 (e.g., as stored in one or more memories, memory devices, or the like as described herein). The passenger profile repository 241 may include data associated with multiple passenger profiles 243. While three passenger profiles 243 are included for illustrative purposes in FIG.2, it should be appreciated that the passenger profile repository 241 may include data associated with numerous additional passenger profiles 243 or fewer passenger profiles 243. In some embodiments, the passenger profile repository 241 may only include data of passenger profiles 243 associated with the vehicle 10 and/or with an operator, owner, etc. of the vehicle 10. However, the passenger repository 241 may include passenger profiles 243 associated with different vehicles 10 and/or different operators, owners, etc. For example, some embodiments of the system 100, control logic 236, and/or associated method 348 may allow for accessing passenger qualities of a guest passenger of a different vehicle indicated by the passenger profile 243 of the guest passenger and stored in a joint or master passenger profile repository 241. Additionally or alternatively, the passenger profile(s) may be retrieved from one or more suitable remote computing devices 26, one or more mobile devices of the passengers, one or more storage devices included in the vehicle 10, and/or one or more storage devices included in one or more other, suitably configured vehicles. In some additional or alternative embodiments, the passenger quality data and/or the passenger quality data associated with the passenger profiles 243 stored in the passenger profile repository 241 may be utilized to train suitable artificial intelligence algorithms of the passenger identification module 240.

In some embodiments, the passenger identification module 240 may compare the passenger data 238 indicative of the passenger quality(ies) of a passenger with multiple passenger profiles 243 and identify the passenger profile 243 associated with the passenger data 238 indicative of the passenger quality(ies) in order to determine the passenger ID of the passenger and/or the seat assembly 11 that the passenger occupies or is about to occupy. For example, the passenger identification module 240 may make such determination(s) based on the passenger data 238 indicative of the passenger quality(ies) and a history of passenger behavior indicated by the associated passenger profile 243 identified as associated with the respective passenger. In some embodiments, the data of the history of passenger behavior indicated by the passenger profile(s) 243 may include past-utilized or previously indicated preferred seat assembly(ies) 11 of the passenger(s) and/or the specific vehicle door(s) utilized by such passenger(s) in the past. Thus and in various embodiments, assigning the passenger identification ID to a passenger of the vehicle 10 may include assigning a given name, nickname, or the like associated with the passenger profile 243 determined to be associated with the passenger in question.

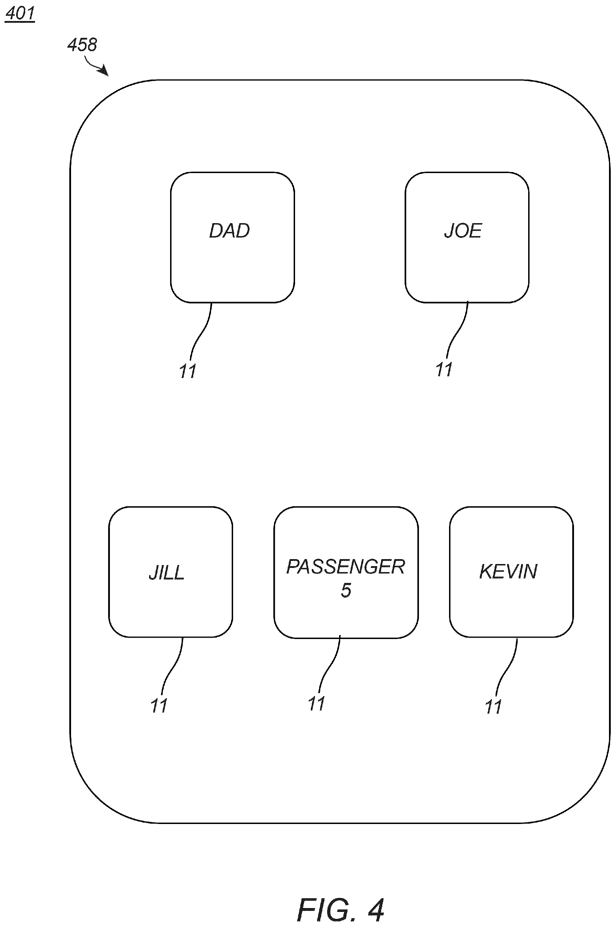

Referring now also to FIG. 4, an exemplary embodiment of a visual indicator of a current vehicle passenger mapping is illustrated in accordance with aspects of the present subject matter. The illustrated visual indicator of the current vehicle passenger mapping (visual indicator 458) reflects the configuration of the vehicle 10 of the system 100. Thus, while the exemplary visual indicator 458 includes five seats arranged in two-rows, the visual indicator 458 may illustrate fewer or additional seat assemblies 11, passengers, rows of seat assemblies 11, seat assemblies 11 per row, and the like to generally correspond to the configuration of the seat assemblies 11 of the corresponding vehicle 10 and passengers thereof.

Referring now generally to FIGS. 2-5 and in several exemplary embodiments, the method 348 may include and/or the passenger identification module 240 may be configured to generating the visual indicator 458 of the current vehicle passenger mapping via at least one display integrated with the vehicle 10 and/or one or more displays of the mobile device(s) 20. The visual indicator 458 may be generated based on the determined position of each of the passengers relative to the predefined passenger seating availability and the passenger ID assigned to each passenger. Some additional or alternative embodiments of the visual indicator 458 may be configured as a graphical user interface displayed by one or more screens or touch screens included in the vehicle 10 and/or the display(s) of mobile device(s) 20 of the passenger(s). Such a graphical user interface may allow for communicating data to the system 100, the passenger identification module 240, and/or a communication control module (e.g., communication control module 242 described in more detail below). Such data communicated may indicate touch screen interactions, activated buttons, dials, nobs, and/or other suitable input interface elements included or associated with the vehicle 10 and/or the mobile device(s) 20.

Thus, embodiments of the graphical user interface may allow for a passenger to select one or more other passengers (e.g., target passengers), to adjust the position of the passengers, and/or to adjust the passenger ID(s) generated for the passenger(s). For example, a passenger may adjust the "Passenger 5" passenger ID for an unknown passenger to a given name or nickname (e.g., grandpa). Additionally or alternatively, the method 348 may include and/or the passenger identification module 240 may be configured to update passenger profiles 243 and/or generate new passenger profiles based on such interactions with the graphical user interface. Such interactions and/or updates may additionally or alternatively be utilized to train or retrain artificial intelligence algorithms included in the identification module 240 and/or associated with the method 348.

Referring again generally to FIGS. 2-3, the control logic 236 may include a communication control module and/or method (communication control module 242) configured to facilitate communication between passengers of the vehicle 10 utilizing an internal mesh communication network for a vehicle, as described herein. It should be appreciated that there are various situations where communication through the mesh network of the vehicle 10 may be desired or required. Non-adjacent passengers may have difficulty hearing and/or seeing each other due to separation within the vehicle 10 and/or road noise. Further, a driver/operator of the vehicle 10 may not be able to or does not wish to turn his or her head to see or hear a speaker better, valuing safety over efficient communication. In other situations, two or more passengers may wish to communicate without distracting or disturbing other passengers of the vehicle 10. For example, passengers in a vehicle often sleep or nap in shifts when traveling extended distances. The systems and methods disclosed herein may allow for some of the passengers of the vehicle to have a conversation at low external volumes while still being able to hear and/or see each other. In other situations, a distracted passenger may not comprehend or register an attempt to communicate with such distracted passenger. The systems and methods disclosed herein may allow for discretely getting the distracted passenger's attention and facilitating the resulting conversation.

For example, the method 348 may include and/or the communication control module 242 may be configured to receive a communication request from a first passenger indicating one or more passenger IDs of one more other passengers with which communication is desired (e.g., method element 354). For example, the first passenger (e.g., a passenger seated within the seat assembly 11 associated with central schematic box 11 of FIG. 2) may wish to communicate with one or more of target passengers (e.g., other passenger(s) seated within the seat assembly(ies) 11 associated with bottom schematic box(es) 11 of FIG. 2) utilizing the system 100 and/or the associated internal mesh communication network for the vehicle 10. For example and referring again briefly to FIG. 4, the communication request may be indicative of a vehicle interface input (e.g., infotainment unit 32 selection) and/or a mobile device interface input with respect to the graphical user interface including the visual indicator 458. For example, the passenger with the passenger ID "Dad" (e.g., the driver in the illustrated embodiment of FIG. 4) may select the target passenger seated in the rear-passenger seat assembly 11 by selecting such position or the identified passenger ID "Kevin." Such selection indicates that Dad wishes to initiate a two-way communication link with Kevin.

In some embodiments, the communication request may include a natural language statement indicative of one or more target passenger IDs. For example, such natural language statement may include or be similar to "Hey Kevin," "I want to talk to Kevin," "Kevin, Kevin, KEVIN," or the like. Thus, some embodiments of the communication control module 242 and/or associated method 348 may include or be associated with one or more artificial intelligence algorithms configured to identify a communication request from a first passenger and determine one or more target passengers from a natural language statement. The artificial intelligence algorithm(s) may be further configured to identify the first passenger (e.g., passenger that spoke the natural language statement) based on known qualities of the first passenger (e.g., voice qualities determined from an associated passenger profile 243). The artificial intelligence algorithm(s) may additionally or alternatively determine the first passenger based on which microphone(s) 16 of the vehicle 10 and/or microphones of the mobile device(s) 20 indicate higher input sound/signal.

In additional or alternative configurations, the method 348 may further include and/or the communication control module 242 may be further configured to hail the at least one other passenger for communication consent in response to the communication request. For example, the communication control module 242 and/or control unit 22 may communicate a signal causing a tone, alert, sound bite, or the like (tone) to be produced by the speaker(s) 18 of the seat assembly(ies) 11 associated with the target passenger(s) and/or the speaker(s) of the mobile device(s) 20 of the target passenger(s). The method 348 may further include and/or the communication control module 242 may be further configured to progressively increase the volume and/or intensity of the tone until the target passenger(s) respond, the communication request times out, and/or the first passenger cancels such communication request. Should the speaker(s) 18 and/or mobile device(s) 20 of target passenger(s) be in use, such as playing a sound/media file, the playback of the sound/media file may be paused, reduced in volume, or the like until the target passenger(s) respond, the communication request times out, the first passenger cancels such communication request, and/or the two-way communication link is severed after completion of a conversation.

Additionally or alternatively, communication control module 242 and/or control unit 22 may communicate a signal causing a message or alert to be displayed on a screen associated with the target passenger(s) and the seat assembly(ies) 11 thereof. For example, such message may be displayed via a screen(s) of an infotainment unit(s) 32 in proximity to the seat assembly(ies) 11, a media screen/display associated with the seat assembly(ies) 11 (e.g., a screen/display provided in the back of the seat assembly(ies) 11 in front of the target passenger(s)), and/or screens/displays of mobile device(s) 20 associated with the target passenger(s). Should the vehicle display(s) of the vehicle 10 and/or mobile device(s) 20 of target passenger(s) be in use, such as displaying an image, playing a media file, etc., the display of the image or playback the media file may be paused, placed in the background, reduced in size, or the like until the target passenger(s) respond, the communication request times out, the first passenger cancels such communication request, and/or the two-way communication link is severed after completion of a conversation.

In additional or alternative configurations, the method 348 may further include and/or the communication control module 242 may be further configured to establish the two-way communication link between the first passenger and the target passenger(s) in response to the target passenger(s) providing affirmative communication consent, see, e.g., method element 356. Such confirmative consent may include a natural language statement determined by an associated artificial intelligence algorithm(s) to indicate the target passenger(s) consent to establish the two-way communication link. Additionally or alternatively, the communication consent may include an interface input received from the target passenger(s) through the vehicle 10 (e.g., interaction with a touch screen, button, dial, or the like provided in proximity to the seat assembly(ies) 11 associated with the target passenger(s)). Additionally or alternatively, the communication consent may include an interface input received from the mobile device(s) 20 associated with the target passenger(s).

For example, the method 348 may include and/or the communication control module 242 may be configured to establish the two-way communication link between the first passenger and the target passenger(s) by establishing a two-way communication link between a first microphone 16 and first speaker 18 (e.g., microphone(s) or speaker(s) included with or provided in proximity to a first seat assembly 11 associated with the first passenger) and target microphone(s) 16 and target speaker(s) 18 (e.g., microphone(s) or speaker(s) included with or provided in proximity to a target seat assembly(ies) 11 associated with the target passenger(s)). In other situations or configurations, the method 348 may include and/or the communication control module 242 may be configured to establish the two-way communication link between the first passenger and the mobile device(s) 20 (e.g., included microphones, speakers, cameras, displays, etc.) associated with the target passenger(s). It should be appreciated that the communication link may also or alternatively be provided between the target passenger(s) and a mobile device (20) associated with the first passenger. Furthermore or alternatively, the two-way communication link between the first passenger and target passenger(s) may include a video two-way communication link. Thus, the communication link may be facilitated by properly configured and arranged cameras, displays, and the like provided with the vehicle 10 and/or the mobile device(s) 20 of the first passenger and/or target passenger(s).

Referring particularly to FIG. 2 and as illustrated, the two-way communication link between the first passenger and the target passenger(s) may be provided via a local area network, e.g., wired connections within the vehicle 10 and/or included wireless receivers, transmitters, transceivers, or the like, such that the two-way communication link is provided through the control unit 22 (FIG. 1) and/or another included controller, processing unit, or the like provided in the vehicle 10. Further, vehicle audio may be paused or the volume may be reduced or eliminated at speakers utilized in the two-way communication link, and other media played via the mobile device(s) and/or the speakers 18, microphones 16, displays, and the like associated with the seat assembly(ies) 11 of the target passengers may be paused, closed, or otherwise put in the background during the two-way communication. In various embodiments, the method 348 may include and/or the communication control module 242 may be configured to augment the two-way communication to facilitate the communication. For example, noise cancellation may be performed to reduce or eliminate road noise in the two-way communication.

In further or other embodiments, the two-way communication link between the first passenger and the target passenger(s) may be provided, at least in part, via a wide area network 246 such as a mobile/cellular network, the internet of things, or the like. In such embodiments and situations, the communication control module 242 and/or control unit 22 may facilitate, request, or send appropriate communication instructions to cause the two-communication link through the wide area network 246 in response to the target passenger(s) providing affirmative consent for such two-communication link. In some such embodiments and situations, the communication control module 242 and/or control unit 22 provide a warning, alert, or the like via displays of the vehicle 10 and/or mobile devices(s) 20 that such wide area two-communication link may consume or utilize data of a cellular data plan of one more of the first passenger and target passenger(s).

It is to be recognized that, depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

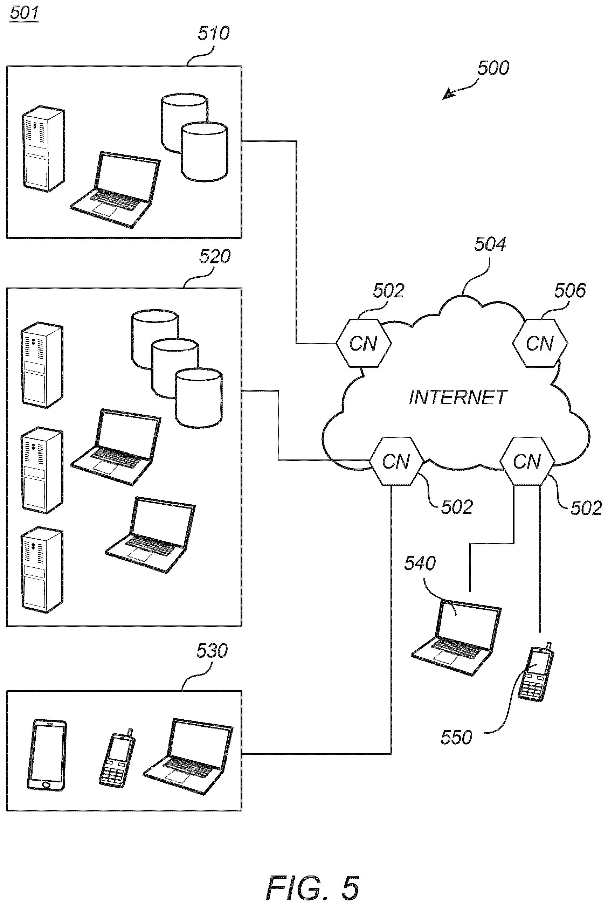

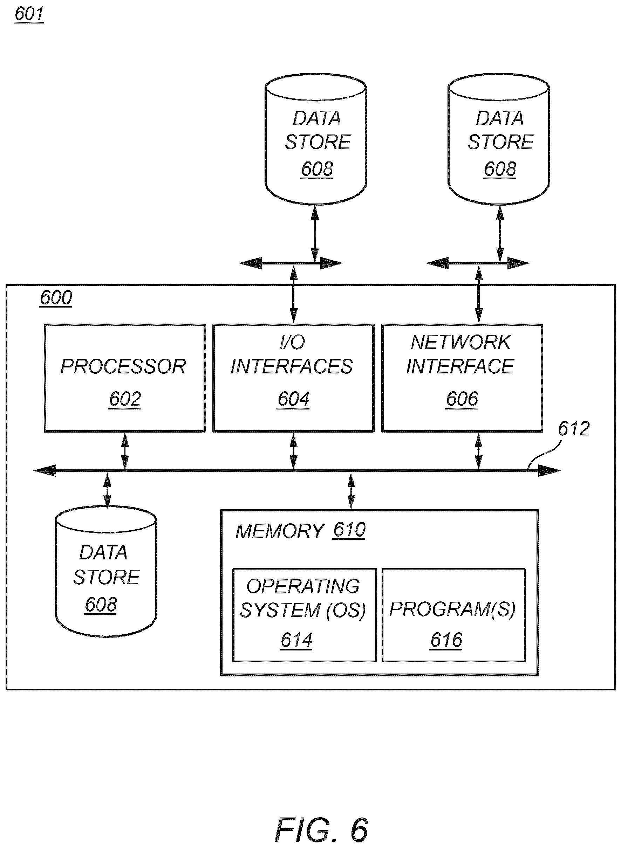

FIG. 5 is a network diagram of a cloud-based system 500 for implementing various cloud-based services of the present disclosure. The cloud-based system 500 includes one or more cloud nodes (CNs) 502 communicatively coupled to the Internet 504 or the like. The cloud nodes 502 may be implemented as a server 600 (as illustrated in FIG. 6) or the like and can be geographically diverse from one another, such as located at various data centers around the country or globe. Further, the cloud-based system 500 can include one or more central authority (CA) nodes 506, which similarly can be implemented as the server 600 and be connected to the CNs 502. For illustration purposes, the cloud-based system 500 can connect to a regional office 510, headquarters 520, various employee's homes 530, laptops/desktops 540, and mobile devices 550, each of which can be communicatively coupled to one of the CNs 502. These locations 510, 520, and 530, and devices 540 and 550 are shown for illustrative purposes, and those skilled in the art will recognize there are various access scenarios to the cloud-based system 500, all of which are contemplated herein. The devices 540 and 550 can be so-called road warriors, i.e., users off-site, on-the-road, etc. The cloud-based system 500 can be a private cloud, a public cloud, a combination of a private cloud and a public cloud (hybrid cloud), or the like.

Again, the cloud-based system 500 can provide any functionality through services, such as software-as-a-service (SaaS), platform-as-a-service, infrastructure-as-a-service, security-as-a-service, Virtual Network Functions (VNFs) in a Network Functions Virtualization (NFV) Infrastructure (NFVI), etc. to the locations 510, 520, and 530 and devices 540 and 550. Previously, the Information Technology (IT) deployment model included enterprise resources and applications stored within an enterprise network (i.e., physical devices), behind a firewall, accessible by employees on site or remote via Virtual Private Networks (VPNs), etc. The cloud-based system 500 is replacing the conventional deployment model. The cloud-based system 500 can be used to implement these services in the cloud without requiring the physical devices and management thereof by enterprise IT administrators.

Cloud computing systems and methods abstract away physical servers, storage, networking, etc., and instead offer these as on-demand and elastic resources. The National Institute of Standards and Technology (NIST) provides a concise and specific definition which states cloud computing is a model for enabling convenient, on-demand network access to a shared pool of configurable computing resources (e.g., networks, servers, storage, applications, and services) that can be rapidly provisioned and released with minimal management effort or service provider interaction. Cloud computing differs from the classic client-server model by providing applications from a server that are executed and managed by a client's web browser or the like, with no installed client version of an application required. Centralization gives cloud service providers complete control over the versions of the browser-based and other applications provided to clients, which removes the need for version upgrades or license management on individual client computing devices. The phrase "software as a service" (SaaS) is sometimes used to describe application programs offered through cloud computing. A common shorthand for a provided cloud computing service (or even an aggregation of all existing cloud services) is "the cloud." The cloud-based system 500 is illustrated herein as one example embodiment of a cloud-based system, and those of ordinary skill in the art will recognize the systems and methods described herein are not necessarily limited thereby.

FIG. 6 is a block diagram of a server 600, which may be used in the cloud-based system 500 (FIG. 5), in other systems, or stand-alone. For example, the CNs 502 (FIG. 5) and the central authority nodes 506 (FIG. 5) may be formed as one or more of the servers 600. The server 600 may be a digital computer that, in terms of hardware architecture, generally includes a processor 602, input/output (I/O) interfaces 604, a network interface 606, a data store 608, and memory 610. It should be appreciated by those of ordinary skill in the art that FIG. 6 depicts the server 600 in an oversimplified manner, and a practical embodiment may include additional components and suitably configured processing logic to support known or conventional operating features that are not described in detail herein. The components (602, 604, 606, 608, and 610) are communicatively coupled via a local interface 612. The local interface 612 may be, for example, but is not limited to, one or more buses or other wired or wireless connections, as is known in the art. The local interface 612 may have additional elements, which are omitted for simplicity, such as controllers, buffers (caches), drivers, repeaters, and receivers, among many others, to enable communications. Further, the local interface 612 may include address, control, and/or data connections to enable appropriate communications among the aforementioned components.

The processor 602 is a hardware device for executing software instructions. The processor 602 may be any custom made or commercially available processor, a central processing unit (CPU), an auxiliary processor among several processors associated with the server 600, a semiconductor-based microprocessor (in the form of a microchip or chipset), or generally any device for executing software instructions. When the server 600 is in operation, the processor 602 is configured to execute software stored within the memory 610, to communicate data to and from the memory 610, and to generally control operations of the server 600 pursuant to the software instructions. The I/O interfaces 604 may be used to receive user input from and/or for providing system output to one or more devices or components.

The network interface 606 may be used to enable the server 600 to communicate on a network, such as the Internet 504 (FIG. 5). The network interface 606 may include, for example, an Ethernet card or adapter (e.g., 10BaseT, Fast Ethernet, Gigabit Ethernet, or 10GbE) or a Wireless Local Area Network (WLAN) card or adapter (e.g., 802.11a/b/g/n/ac). The network interface 606 may include address, control, and/or data connections to enable appropriate communications on the network. A data store 608 may be used to store data. The data store 608 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 608 may incorporate electronic, magnetic, optical, and/or other types of storage media. In one example, the data store 608 may be located internal to the server 600, such as, for example, an internal hard drive connected to the local interface 612 in the server 600. Additionally, in another embodiment, the data store 608 may be located external to the server 600 such as, for example, an external hard drive connected to the I/O interfaces 604 (e.g., a SCSI or USB connection). In a further embodiment, the data store 608 may be connected to the server 600 through a network, such as, for example, a network-attached file server.

The memory 610 may include any of volatile memory elements (e.g., random access memory (RAM, such as DRAM, SRAM, SDRAM, etc.)), nonvolatile memory elements (e.g., ROM, hard drive, tape, CDROM, etc.), and combinations thereof. Moreover, the memory 610 may incorporate electronic, magnetic, optical, and/or other types of storage media. Note that the memory 610 may have a distributed architecture, where various components are situated remotely from one another but can be accessed by the processor 602. The software in memory 610 may include one or more software programs, each of which includes an ordered listing of executable instructions for implementing logical functions. The software in the memory 610 includes a suitable operating system (O/S) 614 and one or more programs 616. The operating system 614 essentially controls the execution of other computer programs, such as the one or more programs 616, and provides scheduling, input-output control, file and data management, memory management, and communication control and related services. The one or more programs 616 may be configured to implement the various processes, algorithms, methods, techniques, etc. described herein.

It will be appreciated that some embodiments described herein may include one or more generic or specialized processors ("one or more processors") such as microprocessors; central processing units (CPUs); digital signal processors (DSPs); customized processors such as network processors (NPs) or network processing units (NPUs), graphics processing units (GPUs), or the like; field programmable gate arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more application-specific integrated circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured or adapted to," "logic configured or adapted to," etc. perform a set of operations, steps, methods, processes, algorithms, functions, techniques, etc. on digital and/or analog signals as described herein for the various embodiments.

Moreover, some embodiments may include a non-transitory computer-readable storage medium having computer-readable code stored thereon for programming a computer, server, appliance, device, processor, circuit, etc. each of which may include a processor to perform functions as described and claimed herein. Examples of such computer-readable storage mediums include, but are not limited to, a hard disk, an optical storage device, a magnetic storage device, a Read-Only Memory (ROM), a Programmable Read-Only Memory (PROM), an Erasable Programmable Read-Only Memory (EPROM), an Electrically Erasable Programmable Read-Only Memory (EEPROM), flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

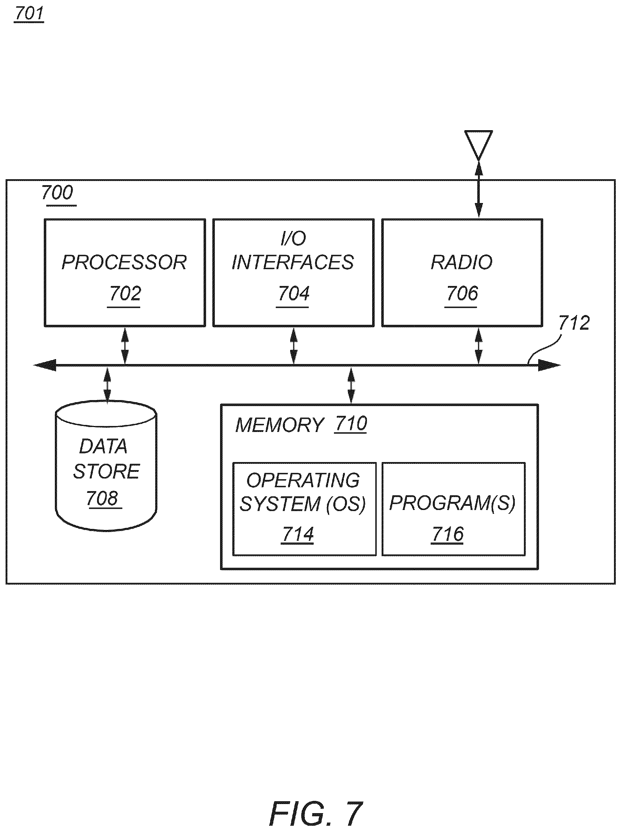

FIG. 7 is a block diagram of a user device 700, which may be used in the cloud-based system 500 (FIG. 5), as part of a network, or stand-alone. Again, the user device 700 can be a vehicle (e.g., one or more control units thereof), a smartphone, a tablet, a smartwatch, an Internet of Things (IoT) device, a laptop, a virtual reality (VR) headset, etc. The user device 700 can be a digital device that, in terms of hardware architecture, generally includes a processor 702, I/O interfaces 704, a radio 706, a data store 708, and memory 710. It should be appreciated by those of ordinary skill in the art that FIG. 7 depicts the user device 700 in an oversimplified manner, and a practical embodiment may include additional components and suitably configured processing logic to support known or conventional operating features that are not described in detail herein. The components (702, 704, 706, 708, and 710) are communicatively coupled via a local interface 712. The local interface 712 can be, for example, but is not limited to, one or more buses or other wired or wireless connections, as is known in the art. The local interface 712 can have additional elements, which are omitted for simplicity, such as controllers, buffers (caches), drivers, repeaters, and receivers, among many others, to enable communications. Further, the local interface 712 may include address, control, and/or data connections to enable appropriate communications among the aforementioned components.

The processor 702 is a hardware device for executing software instructions. The processor 702 can be any custom made or commercially available processor, a CPU, an auxiliary processor among several processors associated with the user device 700, a semiconductor-based microprocessor (in the form of a microchip or chipset), or generally any device for executing software instructions. When the user device 700 is in operation, the processor 702 is configured to execute software stored within the memory 710, to communicate data to and from the memory 710, and to generally control operations of the user device 700 pursuant to the software instructions. In an embodiment, the processor 702 may include a mobile optimized processor such as optimized for power consumption and mobile applications. The I/O interfaces 704 can be used to receive user input from and/or for providing system output. User input can be provided via, for example, a keypad, a touch screen, a scroll ball, a scroll bar, buttons, a barcode scanner, and the like. System output can be provided via a display device such as a liquid crystal display (LCD), touch screen, and the like.

The radio 706 enables wireless communication to an external access device or network. Any number of suitable wireless data communication protocols, techniques, or methodologies can be supported by the radio 706, including any protocols for wireless communication. The data store 708 may be used to store data. The data store 708 may include any of volatile memory elements (e.g., random access memory (RAM, such as DRAM, SRAM, SDRAM, and the like)), nonvolatile memory elements (e.g., ROM, hard drive, tape, CDROM, and the like), and combinations thereof. Moreover, the data store 708 may incorporate electronic, magnetic, optical, and/or other types of storage media.

Again, the memory 710 may include any of volatile memory elements (e.g., random access memory (RAM, such as DRAM, SRAM, SDRAM, etc.)), nonvolatile memory elements (e.g., ROM, hard drive, etc.), and combinations thereof. Moreover, the memory 710 may incorporate electronic, magnetic, optical, and/or other types of storage media. Note that the memory 710 may have a distributed architecture, where various components are situated remotely from one another, but can be accessed by the processor 702. The software in memory 710 can include one or more software programs, each of which includes an ordered listing of executable instructions for implementing logical functions. In the example of FIG. 7, the software in the memory 710 includes a suitable operating system 714 and programs 716. The operating system 714 essentially controls the execution of other computer programs and provides scheduling, input-output control, file and data management, memory management, and communication control and related services. The programs 716 may include various applications, add-ons, etc. configured to provide end user functionality with the user device 700. For example, example programs 716 may include, but not limited to, a web browser, social networking applications, streaming media applications, games, mapping and location applications, electronic mail applications, financial applications, and the like. In a typical example, the end-user typically uses one or more of the programs 716 along with a network, such as the cloud-based system 500 (FIG. 5).

Again, embodiments of the disclosed systems and methods facilitate communication between passengers of the vehicle desiring to converse. A passenger identification module and associated method elements can identify occupants of the vehicle, the number of occupants, and/or assign passenger identifications (passenger IDs) based on data indicating the passengers, such as vehicle sensor data and/or data retrieved from personal devices of the passengers. Such determinations may be made utilizing appropriate artificial intelligence algorithms and/or by comparing qualities or features of the passengers indicated by the data to passenger profiles. The passenger identification module and associated method elements may utilize the passenger data and above determinations to generate a visual indicator of a current vehicle passenger map, and this visual indicator functions as a graphical user interface in various embodiments.

A communication module and associated method elements can receive a communication request from an initiating passenger indicating one or more target passengers or the passenger IDs thereof and establish a two-way communication link between the passengers if the target passenger consents to the communication. For instance, the communication request may include interface input via vehicle hardware (touchscreens, buttons, dials, or the like), interface input via mobile device hardware, and/or a spoken statement. In response to the communication request, the communication module and associated method elements may hail the target passenger(s) utilizing vehicle or mobile device hardware. For instance, a tone may be played and/or may be progressively increased in volume until the target passenger responds, e.g., consents, to the two-way communication. Media, songs, videos, and the like may be paused, put in the background, or reduced in volume while hailing the target passenger(s) and/or during the two-way communication. The two-way communication may generally be provided through one or more microphones, speakers, cameras, and/or displays integrated with the vehicle and/or provided via mobile devices of the passengers.

Although the present disclosure is illustrated and described with reference to embodiments and examples thereof, it will be readily apparent to those of ordinary skill in the art that other embodiments and examples may perform similar functions and/or achieve like results. All such equivalent embodiments and examples are within the spirit and scope of the present disclosure, are contemplated thereby, and are intended to be covered by the following, non-limiting Clauses and/or Claims for all purposes.

Clause 1: A vehicle comprising:
a plurality of seat assemblies;
an internal mesh communication network comprising at least one speaker integrated with the vehicle and at least one microphone integrated with the vehicle;
a system for controlling the operation of the internal mesh communication network, the system comprising:
   a passenger identification module comprising instructions stored in at least one memory and executable by one or more processors to cause the passenger identification module to:
      assign, based on data indicative of a plurality of passengers seated within the vehicle, to each passenger of the plurality of passengers a passenger identification (ID); and
   a communication module comprising instructions stored in at least one memory and executable by one or more processors to cause the communication module to:
      receive a communication request from a first passenger of the plurality of passengers, the communication request indicated at least one passenger ID of at least one other passenger of the plurality of passengers; and
   establish a two-way communication link between the first passenger and the at least one other passenger in response to the at least one other passenger providing affirmative communication consent.

Clause 2: The vehicle of Clause 1, wherein the internal mesh communication network includes at least one speaker and at least one microphone associated with each seat assembly of the vehicle.

Clause 3: An internal mesh communication network for a vehicle comprising:
at least one speaker integrated with the vehicle;
at least one microphone integrated with the vehicle;
a system for controlling the operation of the internal mesh communication network, the system comprising:
   a passenger identification module comprising instructions stored in at least one memory and executable by one or more processors to cause the passenger identification module to:
      assign, based on data indicative of a plurality of passengers seated within the vehicle, to each passenger of the plurality of passengers a passenger identification (ID); and
   a communication module comprising instructions stored in at least one memory and executable by one or more processors to cause the communication module to:
      receive a communication request from a first passenger of the plurality of passengers, the communication request indicated at least one passenger ID of at least one other passenger of the plurality of passengers; and
      establish a two-way communication link between the first passenger and the at least one other passenger in response to the at least one other passenger providing affirmative communication consent.

Clause 4: The internal mesh communication network of any one of the previous clauses, wherein the internal mesh communication network includes a plurality of speakers integrated with the vehicle and a plurality of microphones integrated with the vehicle.

Clause 5: The internal mesh communication network of any one of the previous clauses, wherein the internal mesh communication network is configured to add any mobile device communicatively coupled to the vehicle to the internal mesh communication network.

Clause 6: A system for controlling the operation of an internal mesh communication network for a vehicle, the system comprising:
a passenger identification module comprising instructions stored in at least one memory and executable by one or more processors to cause the passenger identification module to:
   assign, based on data indicative of a plurality of passengers seated within the vehicle, to each passenger of the plurality of passengers a passenger identification (ID); and
a communication module comprising instructions stored in at least one memory and executable by one or more processors to cause the communication module to:
   receive a communication request from a first passenger of the plurality of passengers, the communication request indicated at least one passenger ID of at least one other passenger of the plurality of passengers; and
   establish a two-way communication link between the first passenger and the at least one other passenger in response to the at least one other passenger providing affirmative communication consent.

Clause 7: The system of any one of the previous clauses, wherein the passenger identification module further comprises instructions stored in the at least one memory and executable by the one or more processors to cause the passenger identification module to determine, based on the data indicative of the plurality of passengers seated within the vehicle, a number of passengers seated within the vehicle.

Clause 8: The system of any one of the previous clauses, wherein the passenger identification module further comprises instructions stored in the at least one memory and executable by the one or more processors to cause the passenger identification module to:
determine, based on the data indicative of the plurality of passengers seated within the vehicle, the position of each of the passengers relative to a predefined passenger seating availability.

Clause 9: The system of any one of the previous clauses, wherein the passenger identification module further comprises instructions stored in the at least one memory and executable by the one or more processors to cause the passenger identification module to:
generate, based on the determined position of each of the passengers relative to the predefined passenger seating availability and the passenger ID assigned to each passenger, a visual indicator of a current vehicle passenger mapping via at least one display integrated with the vehicle.

Clause 10: The system of any one of the previous clauses, wherein the visual indicator is configured as a graphical user interface.

Clause 11: The system of any one of the previous clauses, wherein receiving the communication request from the first passenger of the plurality of passengers comprises a vehicle interface input associated with the at least one display integrated with the vehicle and indicating the at least one passenger ID of the at least one other passenger of the plurality of passengers relative to the current vehicle passenger mapping.

Clause 12: The system of any one of the previous clauses, wherein receiving the communication request from the first passenger of the plurality of passengers comprises a natural language statement indicative of the at least one passenger ID of the at least one other passenger of the plurality of passengers.

Clause 13: The system of any one of the previous clauses, wherein the data indicative of the plurality of passengers seated within the vehicle is further indicative of at least one mobile device associated with at least one passenger of the plurality of passengers seated within the vehicle.

Clause 14: The system of any one of the previous clauses, wherein the two-way communication link between the first passenger and the at least one other passenger comprises a video two-way communication link.

Clause 15: The system of any one of the previous clauses, wherein establishing a two-way communication link between the first passenger and the at least one other passenger comprises establishing a two-way communication link between the first passenger and at least one mobile device associated with the at least one other passenger.

Clause 16: The system of any one of the previous clauses, wherein establishing a two-way communication link between the first passenger and the at least one other passenger comprises establishing a two-way communication link between at least one mobile device associated with the first passenger and the at least one other passenger.

Clause 17: The system of any one of the previous clauses, wherein establishing a two-way communication link between the first passenger and the at least one other passenger comprises establishing a two-way communication link including at least a first microphone and a first speaker associated with a first seat of the vehicle where the first passenger is seated.

Clause 18: The system of any one of the previous clauses, wherein establishing a two-way communication link between the first passenger and the at least one other passenger comprises establishing a two-way communication link including at least a second microphone and a second speaker associated with a second seat of the vehicle where a second passenger is seated, the second passenger included in the at least one other passenger.

Clause 19: The system of any one of the previous clauses, wherein establishing a two-way communication link between the first passenger and the at least one other passenger comprises establishing a two-way communication link between at least a first microphone and a first speaker associated with a first seat of the vehicle where the first passenger is seated and at least a second microphone and a second speaker associated with a second seat of the vehicle where a second passenger is seated, the second passenger included in the at least one other passenger.

Clause 20: The system of any one of the previous clauses, wherein the communication module further comprises instructions stored in the at least one memory and executable by the one or more processors to cause the communication module to:
hail the at least one other passenger for communication consent, in response to the communication request.

Clause 21: The system of any one of the previous clauses, wherein hailing the at least one other passenger for communication consent comprises playing a tone a progressively louder volumes until the at least one other passenger responds to the communication request.

Clause 22: The system of any one of the previous clauses, wherein hailing the at least one other passenger for communication consent comprises displaying an alert on at least one of a screen of the vehicle or at least one mobile device associated with the at least one other passenger.

Clause 23: The system of any one of the previous clauses, wherein hailing the at least one other passenger for communication consent comprising requesting communication consent via at least one mobile device associated with the at least one other passenger.

Clause 24: The system of any one of the previous clauses, wherein the request for communication consent pauses any media playing on the at least one mobile device.

Clause 25: The system of any one of the previous clauses, wherein hailing the at least one other passenger for communication consent comprising requesting communication consent via at least one mobile device associated with the at least one other passenger, and wherein the request for communication consent pauses any media playing on the at least one mobile device and provides a request for communication consent to the at least one other passenger via the at least one mobile device.

Clause 26: The system of any one of the previous clauses, wherein the passenger ID is assigned to each passenger of the plurality of passengers utilizing an artificial intelligence algorithm.

Clause 27: The system of any one of the previous clauses, wherein the received data is further indicative of at least one passenger quality of at least one passenger of the plurality of passengers.

Clause 28: The system of any one of the previous clauses, wherein assigning to each passenger of the plurality of passengers a passenger identification (ID) comprises comparing the received data indicative of the at least one passenger quality of the at least one passenger with a plurality of passenger profiles and identifying at least one passenger profile associated with the data indicative of the at least one passenger quality of the at least one passenger.

Clause 29: The system of any one of the previous clauses, wherein assigning to each passenger of the plurality of passengers a passenger identification (ID) comprises assigning the at least one passenger profile to the at least one passenger of the plurality of passengers based on the identified association between the at least one passenger and the at least one passenger profile.

Clause 30: A non-transitory computer-readable medium comprising instructions stored in at least one memory that, when executed by one or more processors, cause the one or more processors to carry out steps comprising:
receiving data indicative of a plurality of passengers seated within a vehicle;
assigning, based on the received data, to each passenger of the plurality of passengers a passenger identification (ID);
receiving a communication request from a first passenger of the plurality of passengers, the communication request indicating at least one passenger ID of at least one other passenger of the plurality of passengers; and
establishing a two-way communication link between the first passenger and the at least one other passenger in response to the at least one other passenger providing affirmative communication consent.

Clause 31: The non-transitory computer-readable medium of Clause 30, wherein the steps further comprise determining, based on the received data, a number of passengers seated within the vehicle and the position of each of the passengers relative to a predefined passenger seating availability.

Clause 32: The non-transitory computer-readable medium of any one of the previous clauses, wherein the steps further comprise generating, based on the determined position of each of the passengers relative to the predefined passenger seating availability and the passenger ID assigned to each passenger, a visual indicator of a current vehicle passenger mapping via at least one display integrated with the vehicle.

Clause 33: The non-transitory computer-readable medium of any one of the previous clauses, wherein receiving the communication request from the first passenger of the plurality of passengers comprises a vehicle interface input associated with the at least one display integrated with the vehicle and indicating the at least one passenger ID of the at least one other passenger of the plurality of passengers relative to the current vehicle passenger mapping.

Clause 34: The non-transitory computer-readable medium of any one of the previous clauses, wherein receiving the communication request from the first passenger of the plurality of passengers comprises a natural language statement indicative of the at least one passenger ID of the at least one other passenger of the plurality of passengers.

Clause 35: The non-transitory computer-readable medium of any one of the previous clauses, wherein the received data is further indicative of at least one mobile device associated with at least one passenger of the plurality of passengers seated within the vehicle.

Clause 36: The non-transitory computer-readable medium of any one of the previous clauses, wherein the two-way communication link between the first passenger and the at least one other passenger comprises a video two-way communication link.

Clause 37: The non-transitory computer-readable medium of any one of the previous clauses, wherein the two-way communication link between the first passenger and the at least one other passenger comprises at least one mobile device associated with the at least one other passenger.

Clause 38: The non-transitory computer-readable medium of any one of the previous clauses, wherein the two-way communication link between the first passenger and the at least one other passenger comprises a mobile device associated with the first passenger.

Clause 39: The non-transitory computer-readable medium of any one of the previous clauses, wherein establishing a two-way communication link between the first passenger and the at least one other passenger comprises establishing a two-way communication link between the first passenger and at least one mobile device associated with the at least one other passenger.

Clause 40: The non-transitory computer-readable medium of any one of the previous clauses, wherein the two-way communication link between the first passenger and the at least one other passenger comprises at least a first microphone and a first speaker associated with a first seat of the vehicle where the first passenger is seated.

Clause 41: The non-transitory computer-readable medium of any one of the previous clauses, wherein the two-way communication link between the first passenger and the at least one other passenger comprises at least a second microphone and a second speaker associated with a second seat of the vehicle where a second passenger is seated,

Clause 42: The non-transitory computer-readable medium of any one of the previous clauses, wherein establishing a two-way communication link between the first passenger and the at least one other passenger comprises establishing a two-way communication link between at least a first microphone and a first speaker associated with a first seat of the vehicle where the first passenger is seated and at least a second microphone and a second speaker associated with a second seat of the vehicle where a second passenger is seated.

Clause 43: The non-transitory computer-readable medium of any one of the previous clauses, wherein the second passenger is included in the at least one other passenger.

Clause 44: The non-transitory computer-readable medium of any one of the previous clauses, wherein the steps further comprise hailing the at least one other passenger for communication consent, in response to the communication request.

Clause 45: The non-transitory computer-readable medium of any one of the previous clauses, wherein hailing the at least one other passenger for communication consent comprises playing a tone a progressively louder volumes until the at least one other passenger responds to the communication request.

Clause 46: The non-transitory computer-readable medium of any one of the previous clauses, wherein hailing the at least one other passenger for communication consent comprises displaying an alert on at least one of a screen of the vehicle or at least one mobile device associated with the at least one other passenger.

Clause 47: The non-transitory computer-readable medium of any one of the previous clauses, wherein hailing the at least one other passenger for communication consent comprising requesting communication consent via at least one mobile device associated with the at least one other passenger.

Clause 48: The non-transitory computer-readable medium of any one of the previous clauses, wherein the request for communication consent pauses any media playing on the at least one mobile device.

Clause 49: The non-transitory computer-readable medium of any one of the previous clauses, wherein hailing the at least one other passenger for communication consent comprising requesting communication consent via at least one mobile device associated with the at least one other passenger, and wherein the request for communication consent pauses any media playing on the at least one mobile device and provides a request for communication consent to the at least one other passenger via the at least one mobile device.

Clause 50: The non-transitory computer-readable medium of any one of the previous clauses, wherein the passenger ID is assigned to each passenger of the plurality of passengers utilizing an artificial intelligence algorithm.

Clause 51: The non-transitory computer-readable medium of any one of the previous clauses, wherein the received data is further indicative of at least one passenger quality of at least one passenger of the plurality of passengers.

Clause 52: The non-transitory computer-readable medium of any one of the previous clauses, wherein assigning to each passenger of the plurality of passengers a passenger identification (ID) comprises comparing the received data indicative of the at least one passenger quality of the at least one passenger with a plurality of passenger profiles and identifying at least one passenger profile associated with the data indicative of the at least one passenger quality of the at least one passenger.

Clause 53: The non-transitory computer-readable medium of any one of the previous clauses, wherein assigning to each passenger of the plurality of passengers a passenger identification (ID) comprises assigning the at least one passenger profile to the at least one passenger of the plurality of passengers based on the identified association between the at least one passenger and the at least one passenger profile.

## Claims

1. A non-transitory computer-readable medium comprising instructions stored in at least one memory that, when executed by one or more processors, cause the one or more processors to carry out steps comprising:
(350) receiving data (238) indicative of a plurality of passengers seated within a vehicle (10);
(352) assigning, based on the received data (238), to each passenger of the plurality of passengers a passenger identification (ID);
(354) receiving a communication request from a first passenger of the plurality of passengers, the communication request indicating at least one passenger ID of at least one other passenger of the plurality of passengers; and
(356) establishing a two-way communication link between the first passenger and the at least one other passenger in response to the at least one other passenger providing affirmative communication consent.

2. The non-transitory computer-readable medium of claim 1, wherein the steps further comprise:
determining, based on the received data (238), a number of passengers seated within the vehicle (10) and the position of each of the passengers relative to a predefined passenger seating availability.

3. The non-transitory computer-readable medium of any one of claims 1-2, wherein the steps further comprise:
generating, based on the determined position of each of the passengers relative to the predefined passenger seating availability and the passenger ID assigned to each passenger, a visual indicator of a current vehicle passenger mapping (458) via at least one display integrated with the vehicle (10).

4. The non-transitory computer-readable medium of any one of claims 1-3, wherein (352) receiving the communication request from the first passenger of the plurality of passengers comprises a vehicle interface input associated with the at least one display integrated with the vehicle (10) and indicating the at least one passenger ID of the at least one other passenger of the plurality of passengers relative to the current vehicle passenger mapping.

5. The non-transitory computer-readable medium of any one of claims 1-4, wherein (352) receiving the communication request from the first passenger of the plurality of passengers comprises a natural language statement indicative of the at least one passenger ID of the at least one other passenger of the plurality of passengers.

6. The non-transitory computer-readable medium of any one of claims 1-5, wherein the received data (238) is further indicative of at least one mobile device (20) associated with at least one passenger of the plurality of passengers seated within the vehicle (10).

7. The non-transitory computer-readable medium of any one of claims 1-6, wherein the two-way communication link between the first passenger and the at least one other passenger comprises a video two-way communication link.

8. The non-transitory computer-readable medium of any one of claims 1-6, wherein establishing the two-way communication link between the first passenger and the at least one other passenger comprises establishing the two-way communication link between the first passenger and at least one mobile device (20) associated with the at least one other passenger.

9. The non-transitory computer-readable medium of any one of claims 1-8, wherein establishing the two-way communication link between the first passenger and the at least one other passenger comprises establishing the two-way communication link between at least a first microphone (16) and a first speaker (18) associated with a first seat (11) of the vehicle (10) where the first passenger is seated and at least a second microphone (16) and a second speaker (18) associated with a second seat (11) of the vehicle (10) where a second passenger is seated, the second passenger included in the at least one other passenger.

10. The non-transitory computer-readable medium of any one of claims 1-9, wherein the steps further comprise:
hailing the at least one other passenger for communication consent, in response to the communication request.

11. The non-transitory computer-readable medium of claim 10, wherein hailing the at least one other passenger for communication consent comprising requesting communication consent via at least one mobile device (20) associated with the at least one other passenger, and wherein the request for communication consent pauses any media playing on the at least one mobile device (20) and provides the request for communication consent to the at least one other passenger via the at least one mobile device (20).

12. The non-transitory computer-readable medium of any one of claims 1-11, wherein the passenger ID is assigned to each passenger of the plurality of passengers utilizing an artificial intelligence algorithm.

13. The non-transitory computer-readable medium of any one of claims 1-12, wherein the received data (238) is further indicative of at least one passenger quality of at least one passenger of the plurality of passengers, and wherein assigning to each passenger of the plurality of passengers the passenger ID comprises:
comparing the received data (238) indicative of the at least one passenger quality of the at least one passenger with a plurality of passenger profiles (243) and identifying at least one passenger profile (243) associated with the data (238) indicative of the at least one passenger quality of the at least one passenger; and
assigning the at least one passenger profile (243) to the at least one passenger of the plurality of passengers based on the identified association between the at least one passenger and the at least one passenger profile (243).

14. An internal mesh communication network for a vehicle (10) comprising:
at least one speaker (18) integrated with the vehicle (10);
at least one microphone (16) integrated with the vehicle (10);
a system (100) for controlling the operation of the internal mesh communication network, the system (100) comprising:
a passenger identification module (240) comprising instructions stored in at least one memory and executable by one or more processors to cause the passenger identification module (240) to:
(352) assign, based on data (238) indicative of a plurality of passengers seated within the vehicle (10), to each passenger of the plurality of passengers a passenger identification (ID); and
a communication control module (242) comprising instructions stored in at least one memory and executable by one or more processors to cause the communication control module (242) to:
(354) receive a communication request from a first passenger of the plurality of passengers, the communication request indicated at least one passenger ID of at least one other passenger of the plurality of passengers; and
(354) establish a two-way communication link between the first passenger and the at least one other passenger in response to the at least one other passenger providing affirmative communication consent.

15. A vehicle (10) comprising:
a plurality of seat (11) assemblies; and
the internal mesh communication network according to claim 14.
